# EUROPEAN PATENT SPECIFICATION

(11) **EP 4 270 287 B1**
(45) Date of publication and mention of the grant of the patent: **10.09.2025**
(21) Application number: 21913443.4
(22) Date of filing: 01.11.2021
(51) Int. Cl.: G06Q 20/32

(54) **PAYMENT METHOD AND APPARATUS, ELECTRONIC DEVICE AND COMPUTER-READABLE STORAGE MEDIUM**
ZAHLUNGSVERFAHREN UND -VORRICHTUNG, ELEKTRONISCHE VORRICHTUNG UND COMPUTERLESBARES SPEICHERMEDIUM
PROCÉDÉ ET APPAREIL DE PAIEMENT, DISPOSITIF ÉLECTRONIQUE, ET SUPPORT D'ENREGISTREMENT LISIBLE PAR ORDINATEUR

(30) Priority: 30.12.2020 CN 202011630586
(43) Date of publication of application: 01.11.2023
(73) Proprietor: GUANGDONG OPPO MOBILE TELECOMMUNICATIONS CORP., LTD., Dongguan, Guangdong 523860 (CN)
(72) Inventor: HUANG, Jianhui, Dongguan, Guangdong 523860 (CN); GAO, Jinze, Dongguan, Guangdong 523860 (CN); ZHOU, Libin, Dongguan, Guangdong 523860 (CN); LI, Dingyi, Dongguan, Guangdong 523860 (CN); LI, Qiming, Dongguan, Guangdong 523860 (CN); SU, Wei, Dongguan, Guangdong 523860 (CN); WANG, Liang, Dongguan, Guangdong 523860 (CN)
(74) Representative: Penza, Giancarlo
(86) International application number: PCT/CN2021/127877
(87) International publication number: WO 2022/142699

(56) References cited:
- EP-A1- 3 291 126
- WO-A1-2018/083663
- CN-A- 105 589 336
- CN-A- 105 589 336
- CN-A- 107 798 537
- CN-A- 110 413 098
- CN-A- 110 413 098
- CN-A- 111 932 248
- CN-A- 113 159 756
- CN-A- 113 392 062
- US-A1- 2015 127 541
- US-A1- 2018 075 442
- US-A1- 2019 340 601
- US-B2- 10 521 776

## Description

### TECHNICAL FIELD

The present disclosure relates to the field of communications technologies, and in particular to a payment method, an electronic device, and a computer-readable storage medium.

### BACKGROUND

Smart wearable devices are becoming more and more popular, especially smart watches and bracelets have been favored by more and more young people. The smart wearable device has not only functions of a traditional watch such as a clock function, but also some functions of other electronic devices, such as a payment function.

However, in a traditional method for payment with a smart wearable device, the payment can be made only through a high-performance system, and is unable to be made under a low-performance system.

US 2019/340601 A1 discloses a method for transmitting data by using a barcode. It includes: receiving a mobile payment instruction; determining, by a mobile device, whether mobile payment information exists, where the mobile payment information is discount information of a mobile payment application; determining, based on the discount information, an application for performing mobile payment; determining, whether a particular light ray emitted by a scanner of a payment terminal is shining on the mobile device; in response to determining that the particular light ray is shining on the mobile device, invoking, a barcode that is used by the application program for mobile payment; displaying the barcode on a display of the mobile device; receiving a payment success message, and displaying a payment success user interface on the display.

CN 110 413 098 A discloses a control method in which an information reading state of a first application of an electronic device is detected, and a control instruction is generated when the information reading state meets a specific condition. According to the control instruction, the electronic device is switched between a first mode and a second mode, where a first processor of the electronic device responds the first application in the first mode, and a second processor of the electronic device responds the first application in the second mode, the second processor may have a lower power consumption than the first processor.

### SUMMARY

Embodiments of the present disclosure provide a payment method, an electronic device and a computer-readable storage medium. The invention is set out in the appended set of claims.

In the payment method, the electronic device and the computer-readable storage medium mentioned above, they are applied to wearable device, and the wearable device includes a first processor and a second processor. The first processor is configured to run a first system, and the second processor is configured to run a second system. The wearable device is in a second system state, and the power consumption of the second processor is lower than power consumption of the first processor. A payment instruction is acquired, and the payment instruction is sent to the first system. A payment graphic code returned, according to the payment instruction, from the first system is received. A payment is made through the payment graphic code. The whole payment process is done in the second system state, and it is controlled by a low power consumption processor. The payment graphic code is received through dual-core communication and is displayed, and the payment is done through the low-performance system. In this way, the payment function, which otherwise cannot be realized on the low-performance system, is enabled by means of the high-performance of the first system.

### BRIEF DESCRIPTION OF THE DRAWINGS

In order to more clearly explain technical solutions of embodiments of the present disclosure or the related art, drawings used in the embodiments or related art will be briefly introduced below. Obviously, the drawings as described below are merely some embodiments of the present disclosure. Based on these drawings, other drawings can be obtained by those skilled in the art without inventive effort.
FIG. 1 is a diagram illustrating an application environment to which a payment method according to an embodiment is applied.
FIG. 2 is a flowchart of a payment method according to an embodiment.
FIG. 3 is a flowchart of a payment method according to another embodiment.
FIG. 4 is a flowchart of uplink data packet transmission according to an embodiment.
FIG. 5 is a schematic diagram illustrating an internal structure of a wearable device according to an embodiment.
FIG. 6 is a schematic diagram illustrating interaction of a payment method according to a specific embodiment.
FIG. 7 is a flowchart of a payment method according to an embodiment.
FIG. 8 is a structural block diagram of a payment apparatus according to an example useful for understanding the invention but outside the scope of the invention as claimed.
FIG. 9 is a structural block diagram of a payment apparatus according to another an example useful for understanding the invention but outside the scope of the invention as claimed.
FIG. 10 is a schematic diagram illustrating an internal structure of an electronic device according to an embodiment.

### DETAILED DESCRIPTION OF PREFERRED EMBODIMENTS

In order to make the objectives, technical solutions and advantages of the present disclosure clearer, the present disclosure will be described in detail below with reference to the accompanying drawings and embodiments. It is understandable that the specific embodiments described herein are merely used to explain the present disclosure and are not intended to limit the present disclosure.

It will be understood that the terms "first", "second", and the like, as used in the specification, may be used herein to describe various elements, but these elements are not limited by these terms. These terms are only used to distinguish a first element from another element. For example, without departing from the scope of the disclosure, the first processor may be referred to as a second processor, and the second processor is referred to as a first processor, which are both processors but are not the same processor.

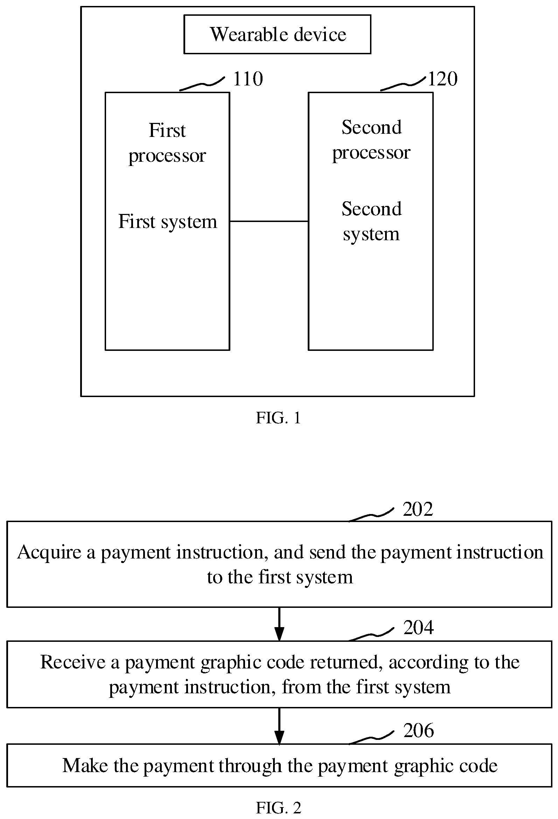

FIG. 1 is a diagram illustrating an application environment to which a payment method according to an embodiment is applied. As illustrated in FIG. 1, the application environment includes a wearable device, and the wearable device includes a first processor 110 and a second processor 120. The first processor 110 and the second processor 120 are both microprocessors. The first processor 110 may be used as a main processor, and the second processor 120 may be used as a coprocessor. Each of the first processor 110 and the second processor 120 may be configured as a corresponding microprocessor according to actual applications; for example, the first processor 110 is configured as a Qualcomm processor, and the second processor 120 is configured as an MCU processor, which is not limited herein. The first processor 110 is integrated with an operating system different from the second processor 120. The first processor is configured to run a first system, the second processor is configured to run a second system, and power consumption of the first system integrated into the first processor 110 is higher than power consumption of the second system integrated into the second processor 120. For example, the first processor 110 may be a Central Processing Unit (CPU) processor, and the corresponding first system may be an Android (Android) system. The second processor 120 may be a Microcontroller Unit (MCU) processor, and the corresponding second system may be a Real Time Operating System (RTOS). That is, the wearable device is a dual-core and dual-system electronic device.

The wearable device may be, but is not limited to, a smart watch, a smart bracelet, or the like. The wearable device may include multiple operating states. A first system state means that the first processor controls running of the wearable device and is responsible for logical operations of data, whereas the second processor plays an auxiliary role, and is configured to collect data, such as state data of the user, for provision to the first processor. In the first system state, it may mainly make the first system operate, and the second system is in a sleep state for most of the time; alternatively, the first system and the second system may operate at the same time, for example, the Android system and the RTOS system operate at the same time, which ensures not only basic functions of the wearable device, but also extended functions of the wearable device, being fully functional. A second system state means that the wearable device mainly or only runs the second system, and the running of the wearable device is controlled by the second processor; for example, the Android system is closed, and only the RTOS system is run, which may enable low power consumption and an ultra-long standby time. The main frequency of the CPU may be up to 1.2 GHz (gigahertz), and the main frequency of the MCU is about 320MHz (megahertz). As such, the power consumption of the first processor is higher than the power consumption of the second processor, and the power consumption of the first system is higher than the power consumption of the second system.

FIG. 2 is a flowchart of a payment method according to an embodiment. The payment method in the embodiment is executed in the second system state, and it is controlled by the second processor. The method includes operations as follows.

Operation 202, a payment instruction is acquired, and the payment instruction sent to the first system.

The wearable device is currently in the second system state, in which state the second processor controls data processing of the wearable device. The wearable device may automatically switch, according to a current operating state, from the first system state to the second system state. For example, upon detecting that the current power of the wearable device is lower than a preset threshold, it automatically switches to the second system state. Alternatively, a user's operation may also be received, and the wearable device is controlled, according to the user's operation, to operate in the second system state. When operating in the second system state, the wearable device implements various functions through a low-performance system, and the power of the wearable device can be saved, which prolongs the standby time. The payment instruction is used to instruct the first system to generate a corresponding payment graphic code. In an embodiment, the payment instruction may carry a timestamp, and according to the timestamp, the first system generates the payment graphic code that dynamically changes over time. Algorithms and forms of generating the payment graphic code are not limited, including but not limited to stacked two-dimensional bar code, or row type two-dimensional bar code, or two-dimensional matrix bar code, or the like.

Specifically, the user's operation is monitored by the second system, and the payment instruction is generated according to a payment operation when the payment operation is monitored, where the payment instruction is an instruction generated when there is a need to make the payment with the graphic code. In an embodiment, the wearable device is an electronic watch, and the payment instruction is generated through an operation performed by the user on a payment interface currently displayed by the electronic watch. The payment operation includes, but is not limited to, a touch operation, a gesture operation, a voice operation, and the like.

Operation 204, a payment graphic code returned, according to the payment instruction, from the first system is received.

The payment graphic code is a graphic code carrying payment information, and it may be in the form of a two-dimensional code or in other forms, where the payment information includes, but is not limited to, a payment account identifier, payment user's identity information, timestamp information, payment running number, and the like.

Making a payment requires generation of the payment graphic code, but the algorithm for generating the payment graphic code is complex, and the second system has limited processing capability. Thus, the second system needs to send the payment instruction to the first system, so that the payment graphic code is generated by the first system. Communication between the first system and the second system may perform data exchange through communication between the first processor and the second processor. The first processor and the second processor may communicate with each other through a predefined protocol. In an embodiment, dual-core communication channels perform reliable data transmission between the Qualcomm chip and the MCU chip through a Serial Peripheral Interface (SPI) protocol.

Specifically, the payment graphic code returned, according to the payment instruction, from the first system may be an unencrypted payment graphic code, or may be an encrypted payment graphic code generated after encryption. The first system and the second system may predetermine an encryption algorithm, so that the second system, upon receiving the encrypted payment graphic code, performs correct decryption to obtain the decrypted payment graphic code. The encryption algorithm includes, but is not limited to, a symmetric encryption algorithm, an asymmetric encryption algorithm, and the like.

In an embodiment, an RSA encryption algorithm is used to ensure that the encrypted two-dimensional code data is not stolen, and ensure the security use of the two-dimensional code in the second system state. The RSA encryption algorithm is an asymmetric encryption algorithm through which decryption may be performed without directly transferring the key, this ensures the security of the information and avoids the risk of cracking that would be caused when the key is directly transferred. A pair of keys, referred to as a public key and a private key respectively, are used to perform the encryption and decryption processes, where the private key is stored by one party for decryption, and the public key is sent to another party for encrypting the information.

Operation 206, the payment is made through the payment graphic code.

Specifically, the second system parses the payment graphic code, renders and displays the graphic code on the corresponding payment interface, and information in the payment graphic code is acquired through scanning of a code scanning device, thereby making the payment. In an embodiment, the payment graphic code is transmitted to a payment application, and the payment application renders the payment graphic code with a parsing and rendering module, and displays the payment graphic code on a graphic code presentation interface of the payment application. The subsequent display and payment process may be done by the second system, and the payment function can also be enabled under the low-performance system.

In the embodiment, the payment method is applied to a wearable device, where the wearable device includes a first processor and a second processor. The first processor is configured to run a first system, and the second processor is configured to run a second system. The wearable device is in a second system state, and the power consumption of the second processor is lower than the power consumption of the first processor. A payment instruction is acquired, and the payment instruction is sent to the first system. A payment graphic code returned, according to the payment instruction, from the first system is received, and the payment is made through the payment graphic code. The whole payment process is done in the second system state, and it is controlled by a low power consumption processor. The payment graphic code is received through dual-core communication and is displayed, the payment is done through the low-performance system. In this way, the payment function, which otherwise cannot be realized on the low-performance system, is enabled by means of the high-performance of the first system.

In an embodiment, the payment instruction is configured to wake up the first system, and instruct the first system to generate the payment graphic code according to the payment instruction. And after operation 204, the method further includes: returning response information to the first system, where the response information is used to instruct the first system to enter a sleep state.

Specifically, only when the payment graphic code needs to be generated, the first system is woken up through the payment instruction. After the payment graphic code returned from the first system is received, the first system is instructed to enter the sleep state by returning the response information to the first system. The subsequent display and payment process may be done through the second system, and the first system is in the sleep state; as such, the power consumption of the wearable device is reduced, the payment function can be enabled in a low power state, since the first system is controlled to be in the sleep state for most of the time in the whole payment process.

In the embodiment, the first system is woken up only when the payment graphic code needs to be generated, and the first system enters the sleep state after the payment graphic code is received, thereby further reducing the power consumption of the first system, enabling the payment under a low power consumption condition, and improving resource utilization.

In an embodiment, the returning the response information to the first system includes: performing verification on the payment graphic code, and generating the response information upon determining that the verification is passed.

Specifically, verification is performed on the payment graphic code, and when the verification is passed, the response information is returned to the first system. The payment graphic code may include current verification information, and standard verification information is prestored in the second system. The second system extracts the current verification information from the received payment graphic code, and if no current verification information is extracted, or the extracted current verification information does not match the standard verification information, it indicates that the verification on the payment graphic code fails, or that the payment graphic code may be damaged and a new payment graphic code needs to be requested again from the first system. If the verification is passed, the response information is generated, where the response information is used to notify the first system that a valid payment graphic code has been received, so as to switch the first system to the sleep state, thereby reducing the power consumption.

When the verification fails, a re-transmission notification may be returned to the first system, to cause the first system to regenerate a payment graphic code and return it to the second system. If the payment graphic code is damaged during transmission or the generated payment graphic code is incorrect, the invalid payment graphic code may be detected in the verification, so that the re-transmission notification is returned to the first system device. The re-transmission notification may carry a current time, so that the first system regenerates an updated payment graphic code according to the current time.

In the embodiment, through the verification operation, the validity of the payment graphic code is improved, and payment failure is avoided. Only when the verification is passed, the response information is generated, which further ensures the reliability of the payment graphic code.

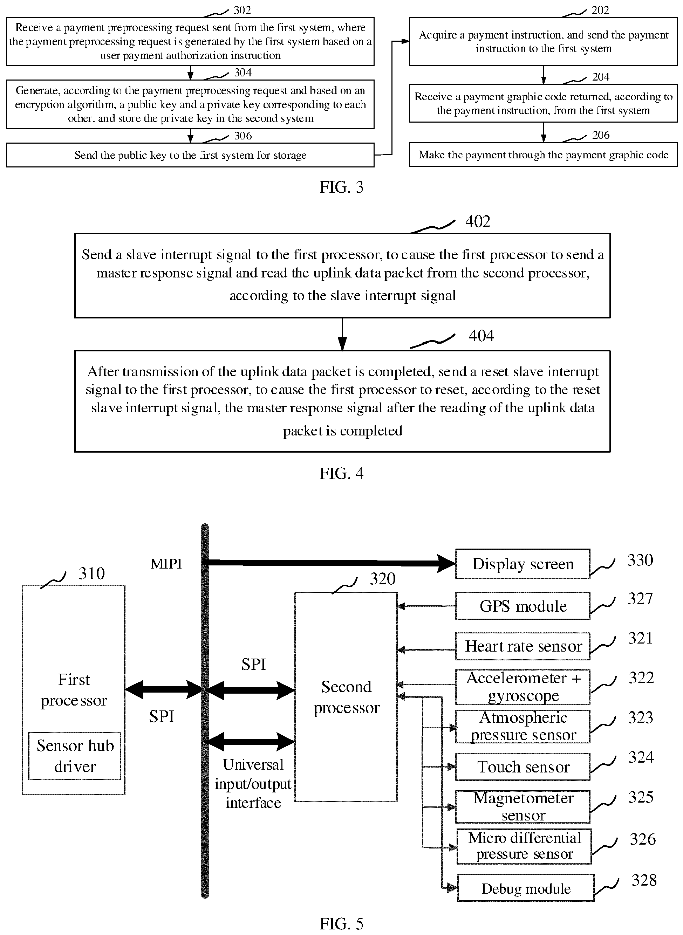

In an embodiment, as illustrated in FIG. 3, before operation 202, the method further includes operations as follows.

Operation 302, a payment preprocessing request is sent from the first system, where the payment preprocessing request is generated by the first system based on a user payment authorization instruction.

The user payment authorization instruction is generated when the user allows a graphic code to be used to make a payment on the wearable device, and it may be generated in the first system state through an operation performed on an authorization setting interface of the wearable device. In the first system state, it may mainly make the first system operate, an authorization setting operation is received through the first system, and the user payment authorization instruction is generated. In an embodiment, the user payment authorization instruction is generated through an operation performed on a user payment authorization key in a pop-up box displayed on an interface of the wearable device.

After the first system acquires the user payment authorization instruction, it indicates that the user allows to pay through the graphic code, the first processor generates the payment preprocessing request and sends it to the second processor. The payment preprocessing request is used to instruct the second processor to generate, based on an encryption algorithm, a public key and a private key corresponding to each other, to ensure secure transmission of the payment graphic code, and ensure payment validity.

Operation 304, a public key and a private key corresponding to each other are generated based on an encryption algorithm according to the payment preprocessing request, and the private key is stored in the second system.

Specifically, in order to ensure secure transmission of the payment graphic code, the second system needs to generate the public key and private key corresponding to each other in advance based on an encryption algorithm. The public key is stored in the first system, for the first system to encrypt the generated payment graphic code with the public key. The private key is stored in the second system, for the second system to decrypt the encrypted payment graphic code received. The algorithm for generating the public key and private key corresponding to each other may be customized. In an embodiment, the public key and the private key are generated through the RSA asymmetric encryption algorithm, where the RSA asymmetric encryption algorithm adopts coprime numbers as large as possible to ensure the high reliability of encryption.

Operation 306, the public key is sent to the first system for storage.

Specifically, the second system sends, through a dual-core communication protocol, the public key to the first system for storage. Channel security is enabled for the delivery of the generated public key by means of the reliable dual-core communication, so that the overall reliability of the payment graphic code can be achieved.

In the embodiment, after it is confirmed that the user allows to use the wearable device to pay through a graphic code, the first system instructs the second system to generate a public key and a private key based on an encryption algorithm, and send the public key to the first system through dual-core communication. The first system stores the public key after receiving it, and waits for a graphic code payment instruction sent from the second system. The security of subsequent transmission of the payment graphic code is ensured by generating the public key and the private key in advance, which improves the reliability of payment.

In an embodiment, operation 204 includes: receiving an encrypted payment graphic code that is encrypted by the first system with the public key; and decrypting the encrypted payment graphic code with the private key, to obtain the payment graphic code.

Specifically, the second system decrypts the encrypted payment graphic code by using the private key, to obtain the decrypted payment graphic code. Only the private key can enable the decryption to be successful, so that the payment graphic code can be used, thereby improving the transmission security of the payment graphic code.

In the embodiment, the public key is transmitted to the first system from the second system, and the encrypted payment graphic code is transmitted to the second system from the first system. In this case, even if both of the encrypted payment graphic code and the public key are intercepted by a hacker, there is no danger, because only the private key of the second system can decrypt the message, thereby preventing leakage of contents of the message.

In an embodiment, operation 206 includes: transferring the payment graphic code to a user interface, and displaying the payment graphic code on the user interface.

Specifically, the second system sends the payment graphic code to a UI user interface for parsing and display, so that the payment is done through graphic code in a low power consumption mode. In an embodiment, a display screen of the wearable device is connected to the first processor and the second processor through a Mobile Industry Processor Interface (MIPI), and may display the data output by the first processor or the second processor. The data analysis and display of the graphic code are performed by the low-power processor, i.e., the second processor, which reduces the power consumption of the wearable device.

In the embodiment, in the second system state, the payment graphic code may be displayed through the low-performance system, which ensures the use of the payment function of the wearable device under the low-performance system, and reduces the power consumption of the wearable device.

In an embodiment, the method further includes: detecting an operating state of the wearable device; and upon determining that the operating state meets a low power consumption condition, switching the wearable device to operate in the second system state, and controlling the first system to enter the sleep state.

Specifically, the operating state of the wearable device includes a device state of the wearable device itself, and may further include a user state collected by the wearable device. The device state includes a state of charge, a device temperature state, a device motion state, and the like. The state of charge includes a low power state and a high power state. The device temperature state includes a normal temperature state and an abnormal temperature state. The device motion state includes a device motion speed, a device rotation angle, and the like. The user state includes at least one of a heart rate, attention information (such as eyeball position information), and cardiopulmonary data of the user, but is not limited thereto. The low power consumption condition may be customized; for example, the low power state, the abnormal temperature state, a state where the motion speed of the device is greater than a preset threshold, a state where the heart rate is lower than a preset threshold, and the like, may all be considered as meeting the low power consumption condition.

In an embodiment, a state vector is defined by various states in the device state and the user state, and it is determined, based on the state vector, whether the low power consumption condition is met. For example, a standard state vector corresponding to the low power consumption condition is preset, and matching is performed between the current state vector defined by various states of the wearable device and the standard state vector; and if the matching is successful, it is considered that the low power consumption condition is met. It may be flexibly determined, according to settings for various states of the wearable device, whether the wearable device meets the low power consumption condition or not, so that the wearable device is accordingly switched to operate in the second system state, and the first system is controlled to enter the sleep state, which reduces the power consumption.

In the embodiment, the operating state of the wearable device is automatically detected; and upon determining that the operating state meets the low power consumption condition, the wearable device is automatically switched to operate in the second system state, and the first system is controlled to enter the sleep state, thereby reducing the power consumption.

In an embodiment, an uplink data packet is transmitted from the second processor to the first processor. As illustrated in FIG. 4, the second processor transmitting the uplink data packet to the first processor includes operations as follows.

Operation 402, a slave interrupt signal is sent to the first processor, to cause the first processor to send a master response signal and read the uplink data packet from the second processor, according to the slave interrupt signal.

The uplink data packet may include at least one of an operation instruction and service data that are received or generated by the second processor. For example, the uplink data packet may be the payment instruction acquired by the second system, the response information generated after receipt of the payment graphic code, the public key generated based on the encryption algorithm, and the like.

The slave interrupt signal is used to force an interruption and indicate that there are some uplink data needed to be transmitted from the second processor to the first processor. Specifically, upon detecting that there is an uplink data packet, the second processor of the wearable device may generate a corresponding slave interrupt signal according to the uplink data packet, and send the generated slave interrupt signal to the first processor through a slave interrupt interface after locking a data transmission interface.

According to the slave interrupt signal, the first processor may read the uplink data packet from the second processor, and send the master response signal to the second processor. The master response signal is used to indicate that the first processor is in a data transmission state.

Operation 404, after transmission of the uplink data packet is completed, a reset slave interrupt signal is sent to the first processor, to cause the first processor to reset, according to the reset slave interrupt signal, the master response signal after the reading of the uplink data packet is completed.

Specifically, the second processor may reset the slave interrupt signal, after the transmission of the uplink data packet is completed. The first processor may receive the reset slave interrupt signal. The reset slave interrupt signal may indicate that the second processor has completed the transmission of data. The first processor may reset the master response signal when obtaining the reset slave interrupt signal.

In the foregoing embodiment, the first processor may read the data packet upon receiving the slave interrupt signal; and after the reading of data is completed, the first processor may reset the master response signal according to the reset slave interrupt signal that is reset by the second processor, where the reset master response signal indicates that single data transmission has been completed. This reduces the delay of communication between the processors, and improves the communication efficiency of the processors.

Specifically, as illustrated in FIG. 5, it is a schematic diagram illustrating an internal structure of the wearable device according to an embodiment. The wearable device includes a first processor 310 corresponding to the first system and a second processor 320 corresponding to the second system. The wearable device may include one or more of a heart rate sensor 321, an accelerometer + gyroscope 322, an atmospheric pressure sensor 323, a touch sensor 324, a magnetometer sensor 325, and a micro differential pressure sensor 326. The second processor 320 may be connected to the sensor(s) included in the wearable device, and configured to acquire data collected by the sensor(s). The second processor 320 may be further connected to a Global Positioning System (GPS) module 327, and be configured to acquire positioning data received by a GPS antenna. The second processor 320 may be further connected to a debug (DEBUG) module 328, and be configured to output debugging data of the wearable device. The first processor 310 and the second processor 320 are connected through a Serial Peripheral Interface (SPI), so that the first system and the second system may transmit communication data through the SPI bus. The display screen 330 is connected to the first processor 310 and the second processor 320 through a Mobile Industry Processor Interface (MIPI), and may display data output by the first processor 310 or the second processor 320. The first processor 310 further includes a sensor hub driver which may be configured to drive data collection and processing of various sensors.

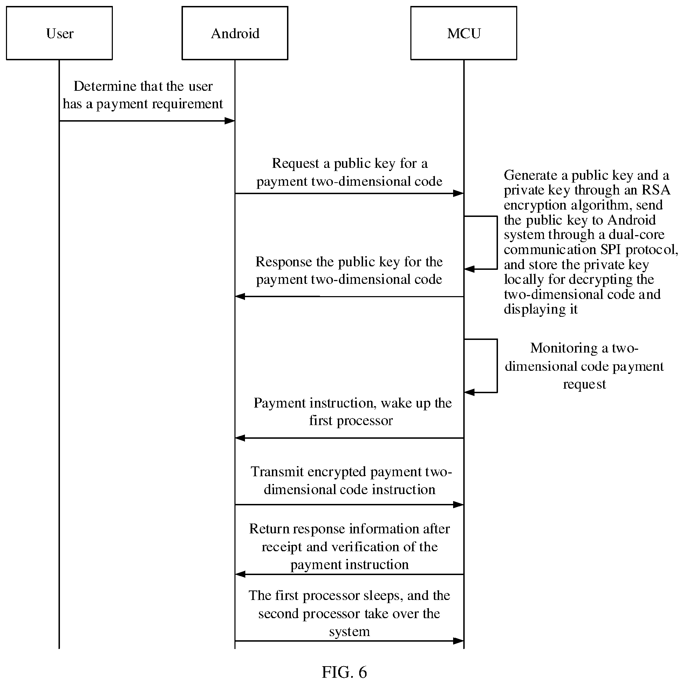

In a specific embodiment, as illustrated in FIG. 6, the first processor 310 is a Qualcomm chip on which the Android system is run, the second processor 320 is an MCU chip on which the RTOS system is run, and the payment method includes operations as follow.
1. The Android system receives a two-dimensional code payment authorization operation performed on an interface, determines that the user has a payment requirement, and generates a payment preprocessing request.
2. The Android system sends the payment preprocessing request to the MCU. The MCU generates a public key and a private key by using the RSA encryption algorithm, sends the public key to the Android system through a dual-core communication SPI protocol, and stores the private key locally for decrypting the two-dimensional code and displaying it.
3. The Android system stores the public key after receiving it, and waits for the MCU to send a two-dimensional code payment instruction.
4. The MCU monitors a payment action of the user in a low power consumption state, and sends the payment instruction to the Android system to wake up the Android system, upon monitoring a two-dimensional code payment request.
5. Upon receiving the payment instruction, the Android system is waked up to generate a two-dimensional code, and encrypt the generated two-dimensional code with the prestored public key.
6. The Android system transmits the encrypted two-dimensional code to the MCU through the dual-core communication SPI protocol.
7. After receiving data responsive to the payment instruction, the MCU obtains two-dimensional code data through decryption with the private key of the MCU itself, and returns, to the Android system, response information to instruct the Android system to enter the sleep state.
8. The MCU sends the two-dimensional code data to the UI for parsing and display, and two-dimensional code payment is made in the low-performance system.

In the embodiment, dual-core communication channels perform reliable data transmission between the Qualcomm chip and the MCU chip through the SPI protocol, and the RSA encryption algorithm is used to protect the encrypted two-dimensional code data from been stolen. This ensures the security use of the two-dimensional code in the low power consumption mode under the low-performance system. In addition, by using the high performance and multiple functions supported by the Android system, the MCU receives the two-dimensional code data sent by the Android system, and makes the two-dimensional code payment safely and reliably in the low power consumption condition.

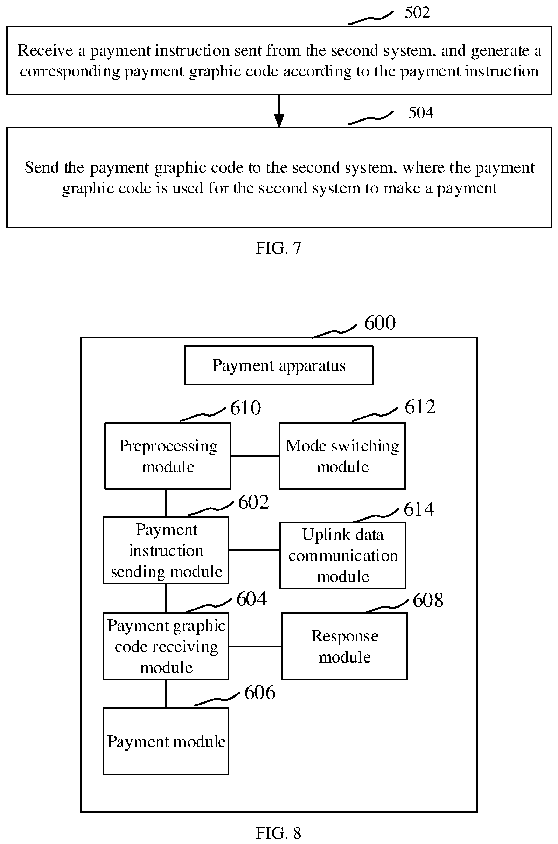

In an embodiment, as illustrated in FIG. 7, a payment method is provided. The payment method is applied to a wearable device, where the wearable device includes a first processor and a second processor. The first processor is configured to run a first system, and the second processor is configured to run a second system. The wearable device is in a second system state, and power consumption of the second processor is lower than power consumption of the first processor. The method includes operations as follows.

Operation 502, a payment instruction sent from the second system is received, and a corresponding payment graphic code is generated according to the payment instruction.

Operation 504, the payment graphic code is sent to the second system, where the payment graphic code is used for the second system to make a payment.

In the embodiment, the wearable device includes a first processor and a second processor, where the first processor is configured to run a first system, and the second processor is configured to run a second system. The wearable device is in a second system state, and the power consumption of the second processor is lower than the power consumption of the first processor. A payment instruction sent from the second system is received, and a corresponding payment graphic code is generated according to the payment instruction. The payment graphic code is sent to the second system, where the payment graphic code is used for the second system to make a payment. The whole payment process is done in the second system state, and it is controlled by the low power consumption processor. The payment graphic code is received through the dual-core communication and is displayed, and the payment is made through the low-performance system. In this way, the payment function, which otherwise cannot be realized on the low-performance system, is enabled by means of the high-performance of the first system.

In an embodiment, operation 502 includes: entering a working state according to the payment instruction. And after operation 504, the method further includes: receiving response information returned by the second system, and entering the sleep state according to the response information.

In an embodiment, the method further includes: acquiring a user payment authorization instruction, when being in the working state; sending a payment preprocessing request to the second system according to the user payment authorization instruction, where the payment preprocessing request is used to instruct the second system to generate, based on an encryption algorithm, a public key and a private key corresponding to each other, and store the private key in the second system; and receiving the public key returned from the second system, and storing the public key.

In an embodiment, operation 502 includes: generating an encrypted payment graphic code which is encrypted with public key. Operation 504 includes: sending the encrypted payment graphic code to the second system.

In an embodiment, a downlink data packet is transmitted from the first processor to the second processor. The first processor transmitting the downlink data packet to the second processor includes: in response to detecting a downlink data packet, sending, by the first processor, a master interrupt signal to the second processor; receiving, by the first processor, a slave response signal returned, according to the master interrupt signal, from the second processor; sending, by the first processor, the downlink data packet to the second processor according to the slave response signal, and resetting the mater interrupt signal after the sending is completed. The reset master interrupt signal is used to instruct the second processor to reset the slave response signal after processing of the downlink data packet is completed.

Specifically, the downlink data packet may include at least one of an operation instruction and service data that are received or generated by the first processor; for example, it may be a payment graphic code. The operation instruction may be used to instruct, after being transmitted to the second processor, the second processor to perform a corresponding service operation. The service data is used to provide, after being transmitted to the second processor, data support for the second processor to perform a service operation corresponding to the service data.

The master interrupt signal is used to force an interruption and indicate that there is a downlink data packet needed to be transmitted from the first processor to the second processor. Specifically, upon detecting that there is a downlink data packet, the first processor of the wearable device may generate a corresponding master interrupt signal according to the downlink data packet, and send the generated master interrupt signal to the second processor through a master interrupt interface. The slave response signal is used to indicate that the second processor is ready to receive the downlink data packet. Data transmission between the first processor and the second processor needs to be implemented through a data transmission interface.

The reset master interrupt signal may indicate that the first processor has completed the transmission of data. After the transmission of the downlink data packet is completed, the first processor may reset the master interrupt signal to notify the second processor that the transmission of the downlink data packet has been completed. The second processor receives the downlink data packet, and may process the downlink data packet. The second processor may reset the slave response signal, after the reset master interrupt signal is received and the processing of the downlink data packet is completed. The second processor may set a slave response interface to be a low level state. The reset slave response signal is used to notify the first processor that the second processor has completed the processing of the downlink data packet. According to the reset slave response signal, the first processor may send the master interrupt signal again to the second processor to perform data transmission.

In the embodiment, when a downlink data packet is detected, the first processor may send a master interrupt signal to the second processor, and receive a slave response signal returned, according to the master interrupt signal, from the second processor. The first processor may send the downlink data packet to the second processor according to the slave response signal, and reset the master interrupt signal after the sending is completed. The reset master interrupt signal may instruct the second processor to reset the slave response signal after completing the processing of the downlink data packet. That is, the data packet may be transmitted upon receipt of the slave response signal, and the master interrupt signal is reset after the transmission is completed, where the reset master interrupt signal indicates that single data transmission has been completed. In this way, there is no need to introduce the slave interrupt signal and the master response signal for secondary confirmation, the delay of communication between the processors can be reduced, and the communication efficiency of the processors is improved.

It is understandable that, although the operations in the flowcharts of FIG. 2 to FIG.4 and FIG. 6 to FIG. 7 are sequentially displayed according to indications of the arrows, these operations are not necessarily performed sequentially in the order indicated by the arrows. Unless specifically stated herein, the performance of these operations is not limited strictly by an order, and these operations may be performed in other orders. In addition, at least some of the operations in FIG. 2 to FIG.4 and FIG. 6 to FIG. 7 may include multiple sub-operations or multiple phases, and these sub-operations or phases are not necessarily performed at the same moment, instead they may be performed at different moments; and these sub-operations or phases are not necessarily performed sequentially, instead they may be performed in turn or alternately with other operations or with at least part of the sub-operations or phases of other operations.

FIG. 8 is a structural block diagram illustrating a payment apparatus according to an example useful for understanding the invention but outside the scope of the invention as claimed. As illustrated in FIG. 8, a payment apparatus 600 is provided, which is applied to a wearable device. The wearable device includes a first processor and a second processor, the first processor is configured to run a first system, and the second processor is configured to run a second system. The wearable device is in a second system state, and power consumption of the second processor is lower than power consumption of the first processor. The apparatus includes a payment instruction sending module 602, a payment graphic code receiving module 604, a response module 608, and a payment module 606.

The payment instruction sending module 602 is configured to acquire a payment instruction, and send the payment instruction to the first system.

The payment graphic code receiving module 604 is configured to receive a payment graphic code returned, according to the payment instruction, from the first system.

The payment module 606 is configured to make a payment through the payment graphic code.

The foregoing payment apparatus makes the payment through the payment graphic code. The whole payment process is done in the second system state, and it is controlled by a low power consumption processor. The payment graphic code is received through dual-core communication and is displayed, and the payment is done through the low-performance system. In this way, the payment function, which otherwise cannot be realized on the low-performance system, is enabled by means of the high-performance of the first system.

In an embodiment, the payment instruction is configured to wake up the first system, to instruct the first system to generate, according to the payment instruction, a payment graphic code. And the apparatus further includes the response module 608.

The response module 608 is configured to return response information to the first system, where the response information is used to instruct the first system to enter a sleep state.

In the embodiment, the first system is woken up only when the payment graphic code needs to be generated, and the first system enters the sleep state after the payment graphic code is received. Thus, the power consumption of the first system is further reduced, and the payment is made under a lower power consumption condition, which improves the resource utilization.

In an embodiment, the response module 608 is further configured to perform verification on the payment graphic code, and generate the response information when the verification is passed.

In the embodiment, through the verification operation, the validity of the payment graphic code is improved, and payment failure is avoided. Only when the verification is passed, the response information is generated, which further ensures the reliability of the payment graphic code.

In an embodiment, the apparatus further includes:
a preprocessing module 610, configured to: receive a payment preprocessing request sent from the first system, where the payment preprocessing request is generated by the first system based on a user payment authorization instruction; according to the payment preprocessing request, generate, based on an encryption algorithm, a public key and a private key corresponding to each other; and store the private key in the second system, and send the public key to the first system for storage.

In the embodiment, after it is confirmed that the user allows to use the wearable device to pay through a graphic code, the first system instructs the second system to generate a public key and a private key based on an encryption algorithm, and send the public key to the first system through dual-core communication. The first system stores the public key after receiving it, and waits for a graphic code payment instruction sent from the second system. The security of subsequent transmission of the payment graphic code is ensured by generating the public key and the private key in advance, which improves the reliability of payment.

In an embodiment, the payment graphic code receiving module 604 is further configured to receive an encrypted payment graphic code that is encrypted by the first system with the public key; and decrypt the encrypted payment graphic code with the private key, to obtain the payment graphic code.

In the embodiment, the public key is transmitted to the first system from the second system, and the encrypted payment graphic code is transmitted to the second system from the first system. In this case, even if both of the encrypted payment graphic code and the public key are intercepted by a hacker, there is no danger, because only the private key of the second system can decrypt the message, thereby preventing leakage of contents of the message.

In an embodiment, the payment module 606 is further configured to transfer the payment graphic code to a user interface, and display the payment graphic code on the user interface.

In the embodiment, in the second system state, the payment graphic code may be displayed through the low-performance system, which ensures the use of the payment function of the wearable device under the low-performance system, and reduces the power consumption of the wearable device.

In an embodiment, the device further includes:
a mode switching module 612, configured to detect an operating state of the wearable device; and when the operating state meets a low power consumption condition, switch the wearable device to operate in the second system state, and control the first system to enter the sleep state.

In the embodiment, the operating state of the wearable device is automatically detected; and upon determining that the operating state meets the low power consumption condition, the wearable device is automatically switched to operate in the second system state, and the first system is controlled to enter the sleep state, thereby reducing the power consumption.

In an embodiment, an uplink data packet is transmitted from the second processor to the first processor, and the apparatus further includes:
an uplink data communication module 614, configured to: send a slave interrupt signal to the first processor, to cause the first processor to send a master response signal and read the uplink data packet from the second processor, according to the slave interrupt signal; and after transmission of the uplink data packet is completed, send a reset slave interrupt signal to the first processor, to cause the first processor to reset, according to the reset slave interrupt signal, the master response signal after the reading of the uplink data packet is completed.

In the embodiment, the first processor may read the data packet upon receiving the slave interrupt signal; and after the reading of data is completed, the first processor may reset the master response signal according to the reset slave interrupt signal that is reset by the second processor, where the reset master response signal indicates that single data transmission has been completed. This reduces the delay of communication between the processors, and improves the communication efficiency of the processors.

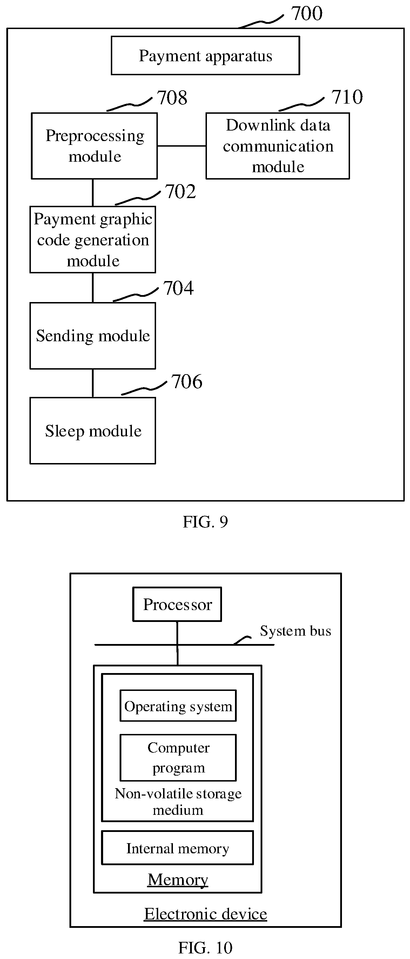

FIG. 9 is a structural block diagram of a payment apparatus of an example useful for understanding the invention but outside the scope of the invention as claimed. As illustrated in FIG. 9, a payment apparatus 700 is provided, which is applied to a wearable device. The wearable device includes a first processor and a second processor, the first processor is configured to run a first system, and the second processor is configured to run a second system. The wearable device is in a second system state, and power consumption of the second processor is lower than power consumption of the first processor. The apparatus includes a payment graphic code generation module 702 and a sending module 704.

The payment graphic code generation module 702 is configured to receive a payment instruction sent from the second system, and generate a corresponding payment graphic code according to the payment instruction.

The sending module 704 is configured to send the payment graphic code to the second system, where the payment graphic code is used for the second system to make a payment.

In the embodiment, the whole payment process is done in the second system state, and it is controlled by the low power consumption processor. The payment graphic code is received through the dual-core communication and is displayed, and the payment is made through the low-performance system. In this way, the payment function, which otherwise cannot be realized on the low-performance system, is enabled by means of the high-performance of the first system.

In an embodiment, the payment graphic code generation module 702 is further configured to make a working state entered according to the payment instruction. The apparatus further includes a sleep module 706, configured to receive response information returned from the second system, and make the sleep state entered according to the response information.

In the embodiment, the first system is woken up only when the payment graphic code needs to be generated, and the first system enters the sleep state after the payment graphic code is received. Thus, the power consumption of the first system is further reduced, and the payment is made under a lower power consumption condition, which improves the resource utilization.

In an embodiment, the apparatus further includes:
a preprocessing module 708, configured to: acquire a user payment authorization instruction when being in the working state; send a payment preprocessing request to the second system according to the user payment authorization instruction, where the payment preprocessing request is used to instruct the second system to generate, based on an encryption algorithm, a public key and a private key corresponding to each other and store the private key in the second system; and receive the public key returned from the second system, and store the public key.

In the embodiment, after it is confirmed that the user allows to use the wearable device to pay through a graphic code, the first system instructs the second system to generate a public key and a private key based on an encryption algorithm, and send the public key to the first system through dual-core communication. The first system stores the public key after receiving it, and waits for a graphic code payment instruction sent from the second system. The security of subsequent transmission of the payment graphic code is ensured by generating the public key and the private key in advance, which improves the reliability of payment.

In an embodiment, the payment graphic code generation module 702 is further configured to generate an encrypted payment graphic code which is encrypted based on the public key. The sending module 704 is further configured to send the encrypted payment graphic code to the second system.

In the embodiment, the public key is transmitted to the first system from the second system, and the encrypted payment graphic code is transmitted to the second system from the first system. In this case, even if both of the encrypted payment graphic code and the public key are intercepted by a hacker, there is no danger, because only the private key of the second system can decrypt the message, thereby preventing leakage of contents of the message.

In an embodiment, a downlink data packet is transmitted from the first processor to the second processor, and the apparatus further includes:
a downlink data communication module 710, configured to: send, a master interrupt signal to the second processor when a downlink data packet is detected; receive a slave response signal that is returned from the second processor according to the master interrupt signal; send the downlink data packet to the second processor according to the slave response signal; and reset the mater interrupt signal after the sending is completed. The reset master interrupt signal is used to instruct the second processor to reset the slave response signal after processing of the downlink data packet is completed.

In the embodiment, when a downlink data packet is detected, the first processor may send a master interrupt signal to the second processor, and receive a slave response signal returned, according to the master interrupt signal, from the second processor. The first processor may send the downlink data packet to the second processor according to the slave response signal, and reset the master interrupt signal after the sending is completed. The reset master interrupt signal may instruct the second processor to reset the slave response signal after completing the processing of the downlink data packet. That is, the data packet may be transmitted upon receipt of the slave response signal, and the master interrupt signal is reset after the transmission is completed, where the reset master interrupt signal indicates that single data transmission has been completed. In this way, there is no need to introduce the slave interrupt signal and the master response signal for secondary confirmation, the delay of communication between the processors can be reduced, and the communication efficiency of the processors is improved.

The division of various modules in the payment apparatus mentioned above is only illustrative. In other embodiments, the payment apparatus may be divided into different modules as required, to implement all or part of the functions of the payment apparatus mentioned above.

For the specific definitions of the payment apparatus, reference may be made to the definitions of the payment method in the foregoing, and details thereof are not repeated herein. The various modules in the payment apparatus mentioned above may be implemented completely or partly in software, hardware, and a combination thereof. The foregoing modules may be in a hardware form, and embedded in or independent of a processor in a computer device; or they may be in a form of software and stored in a memory in the computer device, so that the processor invokes and executes the operations corresponding to the foregoing modules.

FIG. 10 is a schematic diagram illustrating an internal structure of an electronic device according to an embodiment. As illustrated in FIG. 10, the electronic device includes a processor and a memory connected by a system bus. The processor is configured to provide calculation and control capabilities to support operations of the entire electronic device. The memory may include a non-volatile storage medium and an internal memory. The non-volatile storage medium stores an operating system and a computer program. The computer program may be executed by the processor to implement the payment method provided in the foregoing embodiments. The internal memory provides a cached operating environment for the operating system and the computer program in the non-volatile storage medium. The electronic device may be various wearable devices.

The various modules in the payment apparatuses provided in the embodiments of the present disclosure may be implemented in the form of a computer program. The computer program may run on a terminal or a server. Program modules defined by the computer program may be stored in a memory of the electronic device. When the computer program is executed by a processor, operations of the method described in the embodiments of the present disclosure are implemented.

The embodiments of the present disclosure further provide a computer-readable storage medium. One or more non-transitory computer-readable storage media contain computer-executable instructions, and when being executed by one or more processors, the computer-executable instructions cause the processor(s) to perform operations of the payment methods.

A computer program product including instructions which, when being executed on a computer, cause the computer to perform the payment methods.

The memory, storage, database, or any other referred media as used herein may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM), which functions as an external cache memory. By way of illustration and not limitation, the RAM is available in many forms, such as static RAM (SRAM), dynamic RAM (DRAM), synchronous DRAM (SDRAM), double data rate SDRAM (DDR SDRAM), enhanced SDRAM (ESDRAM), Synch link (Synch link) DRAM (SLDRAM), Rambus direct RAM (RDRAM), direct Rambus dynamic RAM (DRDRAM), and Rambus dynamic RAM (RDRAM).

The foregoing embodiments only illustrate several implementations of the present disclosure, and their descriptions are relatively specific and detailed, but they should not be construed as limiting the scope of the present disclosure. It is notable for those skilled in the art that, several variations and improvements may be made without departing from the concept of the present disclosure, which all fall within the protection scope of the present disclosure. Accordingly, the protection scope of the present disclosure are defined by the appended claims.

## Claims

1. A payment method, for a wearable device, wherein the wearable device comprises a first processor (110, 310) and a second processor (120, 320), the first processor (110, 310) is configured to run a first system, the second processor (120, 320) is configured to run a second system, the wearable device is in a second system state which involves that the wearable device mainly or only runs the second system and the running of the wearable device is controlled by the second processor, power consumption of the second processor (120, 320) is lower than power consumption of the first processor (110, 310), and the method comprises:
sending (202), by the second system, a payment instruction to the first system;
generating, by the first system, a payment graphic code according to the payment instruction, and returning (204) the payment graphic code to the second system; and
making (206), by the second system, a payment through the payment graphic code received from the first system;
wherein the making (206) the payment through the payment graphic code comprises:
transferring, by the second system, the payment graphic code to a user interface; and
displaying the payment graphic code on the user interface.

2. The method of claim 1, wherein the payment instruction is configured to wake up the first system and instruct the first system to generate, according to the payment instruction, the payment graphic code, and
after the second system receives the payment graphic code returned, according to the payment instruction, from the first system, the method further comprises:
returning, by the second system, response information to the first system, wherein the response information is configured to instruct the first system to enter a sleep state; and
the first system entering the sleep state in response to the response information.

3. The method of claim 2, wherein the method further comprises:
performing, by the second system, verification on the payment graphic code, and generating the response information in response to determining that the verification is passed.

4. The method of any one of claims 1 to 3, wherein before sending the payment instruction, the method further comprises:
receiving (302), by the second system, a payment preprocessing request sent from the first system, wherein the payment preprocessing request is generated by the first system according to a user payment authorization instruction;
generating (304), by the second system, according to the payment preprocessing request and based on an encryption algorithm, a public key and a private key corresponding to each other, and storing the private key in the second system; and
sending (306), by the second system, the public key to the first system for storage.

5. The method of claim 4, wherein the generating, by the first system, a payment graphic code according to the payment instruction, and returning the payment graphic code to the second system, comprises:
generating, by the first system, the payment graphic code according to the payment instruction, encrypting the payment graphic code with the public key to obtain an encrypted payment graphic code, and returning the encrypted payment graphic code to the second system; and
before the making, by the second system, a payment through the received payment graphic code, the method further comprises:
receiving, by the second system, the encrypted payment graphic code that is encrypted by the first system according to the public key; and
decrypting, by the second system, the encrypted payment graphic code according to the private key, to obtain the payment graphic code.

6. The method of any one of claims 1 to 5, wherein the method further comprises:
detecting an operating state of the wearable device; and
in response to determining that the operating state meets a low power consumption condition, switching the wearable device to operate in the second system state, and controlling the first system to enter a sleep state.

7. The method of any one of claims 2 to 6, wherein an uplink data packet is transmitted from the second processor to the first processor, the uplink data packet comprises at least one of the payment instruction and the response information, and the second processor transmitting the uplink data packet to the first processor comprises:
sending (402), by the second processor, a slave interrupt signal to the first processor, to cause the first processor to send a master response signal and read the uplink data packet from the second processor, according to the slave interrupt signal; and
after transmission of the uplink data packet is completed, sending (404), by the second processor, a reset slave interrupt signal to the first processor, to cause the first processor to reset, according to the reset slave interrupt signal, the master response signal after reading of the uplink data packet is completed.

8. The method of any one of claims 1 to 7, wherein a downlink data packet is transmitted from the first processor to the second processor, the downlink data packet comprises at least the payment graphic code, and the first processor transmitting the downlink data packet to the second processor comprises:
sending, by the first processor, a master interrupt signal to the second processor, in response to detecting the downlink data packet;
receiving, by the first processor, a slave response signal returned, according to the master interrupt signal, from the second processor;
sending, by the first processor, the downlink data packet to the second processor according to the slave response signal; and
resetting the mater interrupt signal after the sending is completed, the reset master interrupt signal is used to instruct the second processor to reset the slave response signal after processing of the downlink data packet is completed.

9. The method of any one of claims 1 to 8, wherein the payment graphic code is a graphic code carrying payment information, and the payment information comprises a payment account identifier, payment user's identity information, timestamp information, and payment running number.

10. The method of claim 3, further comprising:
in response to the verification failing, returning, by the second system, a re-transmission notification carrying a current time to the first system, to cause the first system to generate an updated payment graphic code according to the current time and return it to the second system.

11. An electronic device, comprising a memory and a processor, wherein the memory stores therein a computer program which, when being executed by the processor, causes the processor to perform operations of the method according to any one of claims 1 to 10.

12. A computer-readable storage medium storing a computer program thereon, wherein the computer program, when being executed by a processor, causes operations of the method according to any one of claims 1 to 10 to be implemented.

## Patentansprüche

1. Zahlungsverfahren für eine tragbare Vorrichtung, wobei die tragbare Vorrichtung einen ersten Prozessor (110, 310) und einen zweiten Prozessor (120, 320) umfasst, der erste Prozessor (110, 310) konfiguriert ist, ein erstes System auszuführen, der zweite Prozessor (120, 320) konfiguriert ist, ein zweites System auszuführen, die tragbare Vorrichtung in einem zweiten Systemzustand ist, der beinhaltet, dass die tragbare Vorrichtung hauptsächlich oder ausschließlich das zweite System ausführt und das Ausführen der tragbaren Vorrichtung durch den zweiten Prozessor gesteuert wird, ein Leistungsverbrauch des zweiten Prozessors (120, 320) niedriger als ein Leistungsverbrauch des ersten Prozessors (110, 310) ist und das Verfahren umfasst:
Senden (202), durch das zweite System, einer Zahlungsanweisung an das erste System;
Erzeugen, durch das erste System, eines grafischen Zahlungscodes gemäß der Zahlungsanweisung und Zurückgeben (204) des grafischen Zahlungscodes an das zweite System; und
Vornehmen (206), durch das zweite System, einer Zahlung durch den von dem ersten System empfangenen grafischen Zahlungscode,
wobei das Vornehmen (206) der Zahlung durch den grafischen Zahlungscode umfasst:
Übertragen, durch das zweite System, des grafischen Zahlungscodes an eine Benutzerschnittstelle; und
Anzeigen des grafischen Zahlungscodes auf der Benutzerschnittstelle.

2. Verfahren nach Anspruch 1, wobei die Zahlungsanweisung konfiguriert ist, das erste System zu wecken und das erste System anzuweisen, gemäß der Zahlungsanweisung den grafischen Zahlungscode zu erzeugen, und
nachdem das zweite System den gemäß der Zahlungsanweisung von dem ersten System zurückgegebenen grafischen Zahlungscode empfängt, das Verfahren ferner umfasst:
Zurückgeben, durch das zweite System, von Antwortinformationen an das erste System, wobei die Antwortinformationen konfiguriert sind, das erste System anzuweisen, in einen Schlafzustand einzutreten; und
das erste System in den Schlafzustand als Reaktion auf die Antwortinformationen eintritt.

3. Verfahren nach Anspruch 2, wobei das Verfahren ferner umfasst:
Durchführen, durch das zweite System, einer Verifizierung auf dem grafischen Zahlungscode und Erzeugen der Antwortinformationen als Reaktion auf Bestimmen, dass die Verifizierung bestanden wird.

4. Verfahren nach einem der Ansprüche 1 bis 3, wobei vor dem Senden der Zahlungsanweisung das Verfahren ferner umfasst:
Empfangen (302), durch das zweite System, einer von dem ersten System gesandten Zahlungsvorverarbeitungsanforderung, wobei die Zahlungsvorverarbeitungsanforderung durch das erste System gemäß einer Benutzer-Zahlungsautorisierungsanweisung erzeugt wird;
Erzeugen (304), durch das zweite System, gemäß der Zahlungsvorverarbeitungsanforderung und basierend auf einem Verschlüsselungsalgorithmus, eines öffentlichen Schlüssels und eines privaten Schlüssels, die miteinander korrespondieren, und Speichern des privaten Schlüssels in dem zweiten System; und
Senden (306), durch das zweite System, des öffentlichen Schlüssels an das erste System zur Speicherung.

5. Verfahren nach Anspruch 4, wobei das Erzeugen, durch das erste System, eines grafischen Zahlungscodes gemäß der Zahlungsanweisung und das Zurückgeben des grafischen Zahlungscodes an das zweite System umfasst:
Erzeugen, durch das erste System, des grafischen Zahlungscodes gemäß der Zahlungsanweisung, Verschlüsseln des grafischen Zahlungscodes mit dem öffentlichen Schlüssel, um einen verschlüsselten grafischen Zahlungscode zu erhalten, und Zurückgeben des verschlüsselten grafischen Zahlungscodes an das zweite System; und
vor dem Vornehmen, durch das zweite System, einer Zahlung durch den empfangenen grafischen Zahlungscode das Verfahren ferner umfasst:
Empfangen, durch das zweite System, des verschlüsselten grafischen Zahlungscodes, der durch das erste System gemäß dem öffentlichen Schlüssel verschlüsselt wird; und
Entschlüsseln, durch das zweite System, des verschlüsselten grafischen Zahlungscodes gemäß dem privaten Schlüssel, um den grafischen Zahlungscode zu erhalten.

6. Verfahren nach einem der Ansprüche 1 bis 5, wobei das Verfahren ferner umfasst:
Detektieren eines Betriebszustands der tragbaren Vorrichtung; und
als Reaktion auf Bestimmen, dass der Betriebszustand eine Bedingung für niedrigen Leistungsverbrauch erfüllt, Umschalten der tragbaren Vorrichtung, in dem zweiten Systemzustand betrieben zu werden, und Steuern des ersten Systems, in einen Schlafzustand einzutreten.

7. Verfahren nach einem der Ansprüche 2 bis 6, wobei ein Aufwärtsstrecken-Datenpaket von dem zweiten Prozessor an den ersten Prozessor übertragen wird, das Aufwärtsstrecken-Datenpaket mindestens eines der Zahlungsanweisung und der Antwortinformationen umfasst, und das Übertragen, durch den zweiten Prozessor, des Aufwärtsstrecken-Datenpakets an den ersten Prozessor umfasst:
Senden (402), durch den zweiten Prozessor, eines Slave-Interrupt-Signals an den ersten Prozessor, um den ersten Prozessor zu veranlassen, ein Master-Antwortsignal zu senden und das Aufwärtsstrecken-Datenpaket von dem zweiten Prozessor zu lesen, gemäß dem Slave-Interrupt-Signal; und
nachdem die Übertragung des Aufwärtsstrecken-Datenpakets abgeschlossen ist, Senden (404), durch den zweiten Prozessor, eines Reset-Slave-Interrupt-Signals an den ersten Prozessor, um den ersten Prozessor zu veranlassen, gemäß dem Reset-Slave-Interrupt-Signal das Master-Antwortsignal zurückzusetzen, nachdem das Lesen des Aufwärtsstrecken-Datenpakets abgeschlossen ist.

8. Verfahren nach einem der Ansprüche 1 bis 7, wobei ein Abwärtsstrecken-Datenpaket von dem ersten Prozessor an den zweiten Prozessor übertragen wird, das Abwärtsstrecken-Datenpaket mindestens den grafischen Zahlungscode umfasst und das Übertragen, durch den ersten Prozessor, des Abwärtsstrecken-Datenpakets an den zweiten Prozessor umfasst:
Senden, durch den ersten Prozessor, eines Master-Interrupt-Signals an den zweiten Prozessor als Reaktion auf Detektieren des Abwärtsstrecken-Datenpakets;
Empfangen, durch den ersten Prozessor, eines gemäß dem Master-Interrupt-Signal von dem zweiten Prozessor zurückgegebenen Slave-Antwortsignals;
Senden, durch den ersten Prozessor, des Abwärtsstrecken-Datenpakets an den zweiten Prozessor gemäß dem Slave-Antwortsignal; und
Zurücksetzen des Master-Interrupt-Signals, nachdem das Senden abgeschlossen ist, wobei das Reset-Master-Interrupt-Signal verwendet wird, den zweiten Prozessor anzuweisen, das Slave-Antwortsignal zurückzusetzen, nachdem das Verarbeiten des Abwärtsstrecken-Datenpakets abgeschlossen ist.

9. Verfahren nach einem der Ansprüche 1 bis 8, wobei der grafische Zahlungscode ein grafischer Code ist, der Zahlungsinformationen trägt, und die Zahlungsinformationen eine Zahlungskontokennung, Identitätsinformationen des Zahlungsbenutzers, Zeitstempelinformationen und eine laufende Zahlungsnummer umfassen.

10. Verfahren nach Anspruch 3, ferner umfassend:
als Reaktion auf die fehlgeschlagene Verifizierung Zurückgeben, durch das zweite System, einer Neuübertragungsbenachrichtigung, die eine gegenwärtige Zeit trägt, an das erste System, um das erste System zu veranlassen, einen aktualisierten grafischen Zahlungscode gemäß der gegenwärtigen Zeit zu erzeugen und diesen an das zweite System zurückzugeben.

11. Elektronische Vorrichtung, umfassend einen Speicher und einen Prozessor, wobei der Speicher darin ein Computerprogramm speichert, das, wenn es durch den Prozessor ausgeführt wird, den Prozessor veranlasst, Operationen des Verfahrens nach beliebigen einen der Ansprüche 1 bis 10 durchzuführen.

12. Computerlesbares Speichermedium, das darin ein Computerprogramm speichert, wobei das Computerprogramm, wenn es durch einen Prozessor ausgeführt wird, veranlasst, dass Operationen des Verfahrens nach beliebigen der Ansprüche 1 bis 10 implementiert werden.

## Revendications

1. Procédé de paiement, destiné à un dispositif vestimentaire, le dispositif vestimentaire comportant un premier processeur (110, 310) et un second processeur (120, 320), le premier processeur (110, 310) étant configuré pour exécuter un premier système, le second processeur (120, 320) étant configuré pour exécuter un second système, le dispositif vestimentaire se trouvant dans un second état de système qui implique que le dispositif vestimentaire exécute principalement ou uniquement le second système et le fonctionnement du dispositif vestimentaire étant commandé par le second processeur, une consommation d'énergie du second processeur (120, 320) étant inférieure à une consommation d'énergie du premier processeur (110, 310), et le procédé comportant :
l'envoi (202), par le second système, d'une instruction de paiement au premier système ;
la génération, par le premier système, d'un code graphique de paiement d'après l'instruction de paiement, et le renvoi (204) du code graphique de paiement au second système ; et
la réalisation (206), par le second système, d'un paiement par l'intermédiaire du code graphique de paiement reçu en provenance du premier système ;
la réalisation (206) du paiement par l'intermédiaire du code graphique de paiement comportant :
le transfert, par le second système, du code graphique de paiement à une interface d'utilisateur ; et
l'affichage du code graphique de paiement sur l'interface d'utilisateur.

2. Procédé selon la revendication 1, l'instruction de paiement étant configurée pour réveiller le premier système et enjoindre au premier système de générer, d'après l'instruction de paiement, le code graphique de paiement, et
après que le second système a reçu le code graphique de paiement renvoyé, d'après l'instruction de paiement, à partir du premier système, le procédé comportant en outre :
le renvoi, par le second système, d'informations de réponse au premier système, les informations de réponse étant configurées pour enjoindre au premier système d'entrer dans un état de veille ; et
l'entrée du premier système dans l'état de veille en réaction aux informations de réponse.

3. Procédé selon la revendication 2, le procédé comportant en outre :
la réalisation, par le second système, d'une vérification sur le code graphique de paiement, et la génération des informations de réponse en réponse à la détermination du fait que la vérification est concluante.

4. Procédé selon l'une quelconque des revendications 1 à 3, le procédé comportant en outre, avant l'envoi de l'instruction de paiement :
la réception (302), par le second système, d'une demande de prétraitement de paiement émise à partir du premier système, la demande de prétraitement de paiement étant générée par le premier système d'après une instruction d'autorisation de paiement d'utilisateur ;
la génération (304), par le second système, d'après la demande de prétraitement de paiement et sur la base d'un algorithme de chiffrement, d'une clé publique et d'une clé privée en correspondance mutuelle, et le stockage de la clé privée dans le second système ; et
l'envoi (306), par le second système, de la clé publique au premier système en vue d'un stockage.

5. Procédé selon la revendication 4, la génération, par le premier système, d'un code graphique de paiement d'après l'instruction de paiement, et le renvoi du code graphique de paiement au second système, comportant :
la génération, par le premier système, du code graphique de paiement d'après l'instruction de paiement, le chiffrement du code graphique de paiement avec la clé publique pour obtenir un code graphique chiffré de paiement, et le renvoi du code graphique chiffré de paiement au second système ; et
avant la réalisation, par le second système, d'un paiement par l'intermédiaire du code graphique de paiement reçu, le procédé comportant en outre :
la réception, par le second système, du code graphique chiffré de paiement qui est chiffré par le premier système d'après la clé publique ; et
le déchiffrement, par le second système, du code graphique chiffré de paiement d'après la clé privée, pour obtenir le code graphique de paiement.

6. Procédé selon l'une quelconque des revendications 1 à 5, le procédé comportant en outre :
la détection d'un état de fonctionnement du dispositif vestimentaire ; et
en réponse à la détermination du fait que l'état de fonctionnement remplit une condition de faible consommation d'énergie, la commutation du dispositif vestimentaire vers un fonctionnement dans le second état de système, et la commande du premier système pour qu'il entre dans un état de veille.

7. Procédé selon l'une quelconque des revendications 2 à 6, un paquet de données de liaison montante étant transmis du second processeur au premier processeur, le paquet de données de liaison montante comportant l'instruction de paiement et/ou les informations de réponse, et la transmission, par le second processeur, du paquet de données de liaison montante au premier processeur comportant :
l'envoi (402), par le second processeur, d'un signal d'interruption d'esclave au premier processeur, pour amener le premier processeur à émettre un signal de réponse de maître et à lire le paquet de données de liaison montante provenant du second processeur, d'après le signal d'interruption d'esclave ; et
après que la transmission du paquet de données de liaison montante s'est achevée, l'envoi (404), par le second processeur, d'un signal d'interruption d'esclave de réinitialisation au premier processeur, pour amener le premier processeur à réinitialiser, d'après le signal d'interruption d'esclave de réinitialisation, le signal de réponse de maître après que la lecture du paquet de données de liaison montante s'est achevée.

8. Procédé selon l'une quelconque des revendications 1 à 7, un paquet de données de liaison descendante étant transmis du premier processeur au second processeur, le paquet de données de liaison descendante comportant au moins le code graphique de paiement, et la transmission, par le premier processeur, du paquet de données de liaison descendante au second processeur comportant :
l'envoi, par le premier processeur, d'un signal d'interruption de maître au second processeur, en réponse à la détection du paquet de données de liaison descendante ;
la réception, par le premier processeur, d'un signal de réponse d'esclave renvoyé, d'après le signal d'interruption de maître, à partir du second processeur ;
l'envoi, par le premier processeur, du paquet de données de liaison descendante au second processeur d'après le signal de réponse d'esclave ; et
la réinitialisation du signal d'interruption de maître après que l'envoi s'est achevé, le signal d'interruption de maître de réinitialisation étant utilisé pour enjoindre au second processeur de réinitialiser le signal de réponse d'esclave après que le traitement du paquet de données de liaison descendante s'est achevé.

9. Procédé selon l'une quelconque des revendications 1 à 8, le code graphique de paiement étant un code graphique transportant des informations de paiement, et les informations de paiement comportant un identifiant de compte de paiement, des informations d'identité de l'utilisateur de paiement, des informations d'estampille temporelle et un numéro courant de paiement.

10. Procédé selon la revendication 3, comportant en outre :
en réponse à l'échec de la vérification, le renvoi au premier système, par le second système, d'une notification de réémission transportant une heure actuelle, pour amener le premier système à générer un code graphique de paiement mis à jour d'après l'heure actuelle et à le renvoyer au second système.

11. Dispositif électronique, comportant une mémoire et un processeur, la mémoire conservant dans celle-ci un programme informatique qui, lorsqu'il est exécuté par le processeur, amène le processeur à réaliser des opérations du procédé selon l'une quelconque des revendications 1 à 10.

12. Support de stockage lisible par ordinateur conservant un programme informatique sur celui-ci, le programme informatique, lorsqu'il est exécuté par un processeur, provoquant la mise en œuvre d'opérations du procédé selon l'une quelconque des revendications 1 à 10.
